(19) Europäisches Patentamt / European Patent Office / Office européen des brevets

(11) **EP 3 974 636 A1**

(12) **DEMANDE DE BREVET EUROPEEN**

(43) Date de publication:
**30.03.2022 Bulletin 2022/13**

(21) Numéro de dépôt: **21196808.6**

(22) Date de dépôt: **15.09.2021**

(51) Classification Internationale des Brevets (IPC):
**F02D 19/06** (2006.01)     **F02D 19/08** (2006.01)
**F02D 41/14** (2006.01)

(52) Classification Coopérative des Brevets (CPC):
**F02D 19/0692; F02D 19/0647; F02D 19/0689;**
**F02D 19/081;** F02D 41/1454; F02D 2200/021;
F02D 2200/06

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.09.2020 FR 2009671**

(71) Demandeur: **Renault s.a.s**
**92100 Boulogne Billancourt (FR)**

(72) Inventeurs:
• **MOUNETOU, Christophe**
**91510 LARDY (FR)**
• **SANCHES, Laurent**
**45480 CHAUSSY (FR)**

(74) Mandataire: **Renault Group**
**Renault s.a.s.**
**API : TCR GRA 2 36**
**1, Avenue du Golf**
**78084 Guyancourt Cedex (FR)**

(54) **PROCÉDÉ DE COMMANDE D'UN SYSTÈME D'ALIMENTATION À BICARBURATION POUR VÉHICULE AUTOMOBILE ET UNITÉ DE TRAITEMENT ASSOCIÉE**

(57) L'invention concerne un procédé de commande d'un système d'alimentation à bicarburation d'un moteur thermique (2) à combustion interne pour véhicule automobile (1) comprenant au moins un premier injecteur (9) situé dans une conduite d'admission (7) d'au moins une chambre de combustion (6) dudit moteur, et un deuxième injecteur (10) comprenant une buse d'injection (11) située dans ladite chambre de combustion. Ce procédé comprend l'injection d'un premier carburant par le premier injecteur dans la conduite d'admission pour faire fonctionner ledit moteur et l'injection simultanée d'un deuxième carburant par le deuxième injecteur dans la chambre de combustion est proposé.

Le deuxième carburant est injecté lorsque la température de la buse d'injection du deuxième injecteur est supérieure à un premier seuil pendant une durée prédéterminée (Tp), le débit de deuxième carburant injecté étant déterminé pour refroidir la buse d'injection de sorte que la température de la buse d'injection soit inférieure à un deuxième seuil.

[Fig 1]

EP 3 974 636 A1

**Description**

La présente invention concerne les moteurs thermiques à bicarburation de véhicules automobiles, et plus particulièrement un procédé de commande d'un système d'alimentation à bicarburation d'un moteur thermique et une unité de traitement mettant en œuvre le procédé de commande.

Un moteur thermique à combustion interne de véhicule automobile peut être équipé de deux systèmes d'injection de carburant distincts comprenant généralement un système d'injection directe et un système d'injection indirecte pour alimenter le moteur en carburants de deux types différents.

Le système d'injection directe introduit un premier type de carburant, généralement de l'essence, dans les chambres de combustion du moteur, et le système d'injection indirecte introduit un deuxième type de carburant, généralement du gaz de pétrole liquéfié GPL ou du gaz naturel liquéfié GNL, en amont des soupapes d'admission du moteur, par exemple dans des pipes d'admission d'air de la culasse du moteur ou encore dans un répartiteur d'admission du moteur.

Lorsque le moteur est alimenté par le système d'injection directe, des injecteurs injectent le premier type de carburant dans la chambre de combustion.

En traversant chaque injecteur, le premier carburant refroidit chacun des injecteurs de sorte que la température des injecteurs reste inférieure à leur température maximale admissible, empêchant leur détérioration.

Lorsque le moteur est alimenté par le système d'injection indirecte, les injecteurs du système d'injection directe se réchauffent sous l'effet de la température générée dans la chambre de combustion du moteur, mais ne sont plus refroidis par le premier carburant.

La température des injecteurs du système d'injection directe augmente fortement de sorte que, dans certaines conditions, notamment sur certains points de fonctionnement très chargés du moteur et après une certaine durée, la température des buses des injecteurs peut en arriver à excéder la température maximale admissible des buses.

On pourra se référer au document KR2017/0124358 qui divulgue un moteur comprenant un système d'injection directe et un système d'injection indirecte de carburant.

Lorsque le moteur fonctionne en injection indirecte et que la température des injecteurs d'injection directe devient excessive, le système d'injection indirecte est coupé et le système d'injection direct est mis en route pour alimenter le moteur de manière exclusive.

Le procédé divulgué permet de baisser la température des injecteurs du système d'injection direct.

Cependant, lorsque le moteur est alimenté en essence par le système d'injection direct, les émanations de résidus de combustion, notamment les émanations de dioxyde de carbone, sont supérieures à celles qui sont rejetées lorsque le moteur est alimenté par le système d'injection indirect délivrant un carburant gazeux.

Les émanations de dioxyde de carbone sont supérieures d'environ 10% quand l'alimentation en essence est exclusive.

Le document US2009/0292443 divulgue un procédé de contrôle de l'alimentation en carburant d'un moteur, le procédé pouvant comprendre l'injection d'un premier carburant par des injecteurs d'un système d'injection indirecte et l'injection d'un deuxième carburant par des injecteurs d'un système d'injection directe.

L'injection simultanée de carburant à partir des injecteurs des systèmes d'injection directe et indirecte permet de diminuer la température des injecteurs du système d'injection directe.

Cependant, ce document ne divulgue pas une méthode précise de réglage de la quantité de deuxième carburant à injecter pour contrôler la température des injecteurs du systèmes d'injection directe.

Si la quantité de deuxième carburant injectée est trop faible, lesdits injecteurs sont insuffisamment refroidis, et si la quantité de deuxième carburant injectée est trop élevée, le refroidissement est plus que suffisant, mais les émanations de dioxyde de carbone augmentent indument.

Il est donc proposé de pallier tout ou partie des inconvénients précités et, en particulier, d'empêcher la dégradation des injecteurs du système d'injection direct tout en minimisant les émanations de résidus de combustion.

Au vu de ce qui précède, l'invention propose un procédé de commande d'un système d'alimentation à bicarburation d'un moteur thermique à combustion interne pour véhicule automobile comprenant au moins un premier injecteur situé dans une conduite d'admission d'au moins une chambre de combustion dudit moteur, et un deuxième injecteur comprenant une buse d'injection située dans ladite chambre de combustion, le procédé comprenant l'injection d'un premier carburant par le premier injecteur dans la conduite d'admission pour faire fonctionner ledit moteur et l'injection simultanée d'un deuxième carburant par le deuxième injecteur dans la chambre de combustion.

Le deuxième carburant est injecté lorsque la température de la buse d'injection du deuxième injecteur est supérieure à un premier seuil pendant une durée prédéterminée, le débit de deuxième carburant injecté étant déterminé pour refroidir la buse d'injection de sorte que la température de la buse d'injection soit inférieure à un deuxième seuil.

Selon une caractéristique, la détermination de la température de la buse d'injection du deuxième injecteur comprend :

- la détermination d'une première température de la buse d'injection à partir du régime et de la charge du moteur, et du mode de carburation du moteur,
- la détermination d'une deuxième température de la buse d'injection à partir de la première température de la buse d'injection et de la température d'un liquide de refroidissement du moteur,

- la correction de la deuxième température de la buse d'injection lorsque le moteur n'est pas alimenté en carburant, la température de la buse étant égale à la deuxième température de la buse ou à la deuxième température corrigée de la buse.

De préférence, au moins une première cartographie relie la première température de la buse d'injection au régime et à la charge du moteur, selon le mode de carburation du moteur.

Avantageusement, au moins une deuxième cartographie relie un coefficient de correction à la température du liquide de refroidissement du moteur, la deuxième température de la buse d'injection étant égale au coefficient de correction multiplié par la première température de la buse d'injection.

Selon une autre caractéristique, la détermination de la deuxième température corrigée de la buse comprend la multiplication de la deuxième température de la buse par un filtre du premier ordre modélisant l'évolution temporelle de la température de la buse lorsque le moteur n'est pas alimenté en carburant.

De préférence, le débit du deuxième carburant injecté est déterminé à partir de la différence de température entre la température de la buse et d'une température maximale admissible de la buse, et du régime et de la charge du moteur.

Avantageusement, au moins une troisième cartographie relie le débit du deuxième carburant injecté à la différence de température, et au régime et à la charge du moteur.

De préférence, lorsque le deuxième carburant est injecté, le débit de premier carburant injecté est réduit et le débit du deuxième carburant est ajusté de sorte que la richesse du mélange d'air et des premier et deuxième carburants soit égale à 1.

Avantageusement, la température de la buse d'injection du deuxième injecteur est déterminée à chaque cycle moteur.

L'invention a également pour objet une unité de traitement pour système d'alimentation à bicarburation d'un moteur thermique à combustion interne pour véhicule automobile.

L'unité de traitement est configurée pour déterminer un débit d'un deuxième carburant et injecter ledit débit, le deuxième carburant étant destiné à être injecté par au moins un deuxième injecteur comprenant une buse d'injection située dans au moins une chambre de combustion du moteur lorsque au moins un premier injecteur situé dans une conduite d'admission de la chambre de combustion injecte un premier carburant dans la conduite d'admission pour faire fonctionner ledit moteur, le deuxième carburant étant injecté simultanément avec le premier carburant lorsque la température de la buse d'injection du deuxième injecteur est supérieure à un premier seuil pendant une durée prédéterminée, le débit de deuxième carburant injecté étant déterminé pour refroidir la buse d'injection de sorte que la température de la buse d'injection soit inférieure à un deuxième seuil.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre schématiquement un véhicule automobile doté d'une unité de traitement selon l'invention,
[Fig 2] illustre un exemple de modélisation de l'évolution de la température de la buse d'injection du deuxième injecteur en fonction du débit de deuxième carburant selon l'invention,
[Fig 3] illustre un exemple de modélisation de l'évolution du débit de deuxième carburant en fonction de la température de la buse d'injection du deuxième injecteur selon l'invention, et
[Fig 4] illustre un exemple de procédé de commande du système d'alimentation à bicarburation selon l'invention.

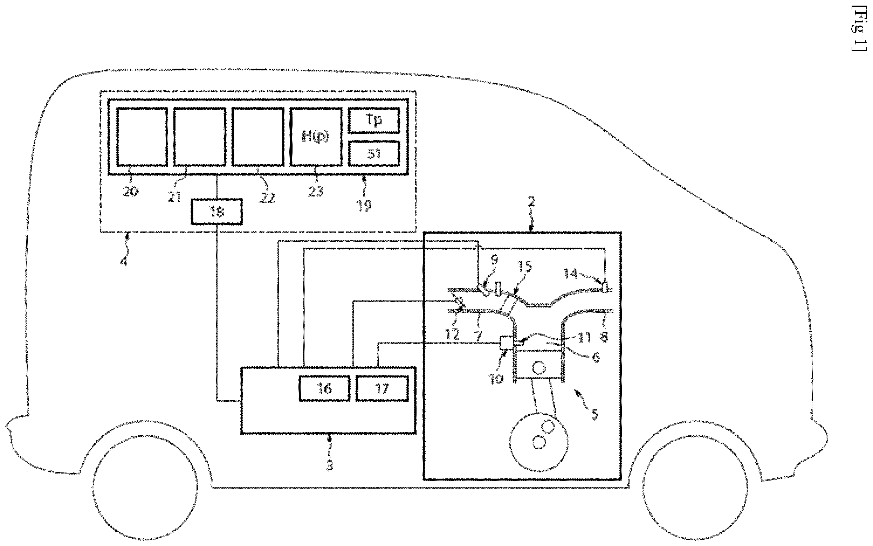

La figure 1 illustre un véhicule 1 automobile comprenant un moteur 2 thermique à combustion interne à bicarburation, et un système d'alimentation à bicarburation du moteur 2 comprenant un dispositif de contrôle moteur 3 et un dispositif de refroidissement d'injecteurs 4.

Dans ce qui suit, on considère que le moteur 2 comprend un cylindre 5 comprenant une chambre de combustion 6 alimentée par une conduite d'admission 7 et reliée à une conduite d'échappement 8.

Bien entendu, le moteur 2 peut comprendre plus d'un cylindre, les cylindres étant identiques.

Le moteur 2 comprend un système d'injection de carburant indirect comprenant un premier injecteur 9 situé dans la conduite d'admission 7, et un système d'injection de carburant direct comprenant un deuxième injecteur 10 équipé d'une buse d'injection 11 située dans la conduite d'admission 7.

La conduite d'admission 7 comprend en outre un boîtier papillon 12 en amont du premier injecteur 9 pour réguler le débit d'air admis dans la chambre de combustion 6.

Le moteur 2 comprend en outre un dispositif de mesure de richesse du mélange air/carburant comprenant au moins une sonde à oxygène 14 située dans la conduite d'échappement 8, notamment en amont d'un dispositif de dépollution de type catalyseur trois voies (non représenté) sur la figure.

De préférence, la sonde à oxygène 14 est une sonde lambda (c'est-à-dire de type proportionnel).

Le premier injecteur 9 délivre un premier carburant, par exemple un carburant gazeux tel que du gaz de pétrole liquéfié GPL ou du gaz naturel liquéfié GNL ou un carburant du type liquide, par exemple de l'essence, et le deuxième injecteur 10 délivre un deuxième carburant, par exemple un carburant liquide tel que de l'essence ou un carburant du type gazeux, par exemple du GPL liquide.

On suppose par exemple dans ce qui suit que le premier carburant comprend un carburant gazeux et le deuxième carburant comprend de l'essence, ce qui correspond par exemple au cas de nombreux moteurs fonctionnant au GPL mis sur le marché.

Une soupape d'admission 15 située entre le premier injecteur 9 et la chambre de combustion 6 régule l'admission du mélange air/premier carburant ou de l'air dans la chambre de combustion 6.

Le moteur 2 est refroidi par un liquide de refroidissement.

Le dispositif de contrôle moteur 3 pilote le moteur 2, notamment les premier et deuxième injecteurs 9, 10 et le boîtier papillon 12 en fonction notamment du dispositif de mesure de richesse, d'instructions du conducteur du véhicule 1 fournies par exemple par la pédale d'accélérateur du véhicule, et du dispositif de refroidissement d'injecteurs 4.

Le dispositif de contrôle moteur 3 comprend un premier contrôleur 16 d'injection pilotant le premier injecteur 9 et un deuxième contrôleur 17 d'injection pilotant le deuxième injecteur 10, qui peuvent être confondus l'un avec l'autre.

Le dispositif de refroidissement d'injecteurs 4 comprend une unité de traitement 18 et une mémoire 19 reliée à l'unité de traitement 19.

L'unité de traitement 18 détermine un débit Qp de deuxième carburant destiné à être injecté par le deuxième injecteur 10 simultanément avec un débit du premier carburant lorsque la température T-11 de la buse d'injection 11 du deuxième injecteur 10 est supérieure à un premier seuil SI pendant une durée prédéterminée Tp.

Le débit de deuxième carburant est déterminé pour refroidir la buse 11 de sorte que la température de la buse 11 soit inférieure au premier seuil S1.

Le débit Qp de deuxième carburant refroidit la buse d'injection 11 lorsque la chambre de combustion 6 est alimentée par le premier injecteur 9.

Des cartographies 20, 21, 22, une fonction de transfert H(P) d'un filtre 23 de premier ordre, le premier seuil SI et la durée prédéterminée Tp sont sauvegardés dans la mémoire 19. L'intérêt des cartographies et de la fonction de transfert est précisé par la suite.

Le premier seuil SI est par exemple déterminé à partir de la température maximale admissible Tmax-11 de la buse 11 pour fonctionner sans se dégrader, la température maximale admissible Tmax-11 étant généralement fournie par le constructeur de l'injecteur 10.

Une première cartographie 20 relie une première température Temp1 de la buse d'injection 11 du deuxième injecteur 10 au régime et à la charge du moteur 2 selon le mode de carburation du moteur.

La charge du moteur 2 correspond de manière connue en soi au couple délivré par le moteur ou à la pression moyenne effective du cylindre 5.

Une deuxième cartographie 21 reliant un coefficient COEF de correction à la température du liquide de refroidissement du moteur 2 est sauvegardée dans la mémoire 19.

La prise en compte de la température du liquide de refroidissement permet d'estimer la température de la buse 11 de manière plus précise que par la seule première cartographie, le liquide de refroidissement de la buse 11 refroidissant la buse 11 par l'intermédiaire de la culasse du moteur 2.

Une troisième cartographie 22 relie un débit du deuxième carburant à une différence de température et au régime et à la charge du moteur.

La troisième cartographie 22 prend en compte le refroidissement de la buse 11 engendré par le passage d'essence à travers ladite buse.

La détermination des première, deuxième et troisième cartographies est détaillée dans ce qui suit.

La fonction de transfert H(p) modélise l'évolution temporelle de la température de la buse 11 lorsque le moteur 2 n'est pas alimenté en carburant, par exemple lorsque le conducteur du véhicule 1 relâche complètement la pédale d'accélérateur du véhicule 1, par exemple dans une pente descendante pour bénéficier du frein moteur.

Le relâchement complet de la pédale d'accélérateur est interprété par le dispositif de contrôle moteur 3 comme une consigne nulle du couple délivré par le moteur 1 de sorte que le dispositif de contrôle moteur 3 coupe l'injection de carburant, le dispositif 3 pilotant en outre généralement le boîtier papillon 12 de manière à fermer le papillon pour maximiser le frein moteur.

L'absence de combustion dans la chambre de combustion 6 et le balayage du cylindre 5 par de l'air s'écoulant à travers le boîtier papillon 12 fermé refroidissent la buse 11.

La constante de temps de la fonction de transfert H(p) est déterminée à partir de relevés de mesures de durée de refroidissement de la buse 11 réalisées sur banc d'essai lorsque le moteur 2 passe d'un point de fonctionnement où il est alimenté par le premier injecteur 9 à un point de débit de carburant nul.

Pour chaque point de fonctionnement stabilisé du moteur 2 défini par un couple régime et charge, et pour différentes températures connues stabilisées de la buse 11, la pédale d'accélérateur est complètement relâchée.

La durée de refroidissement maximale de la buse est égale à la durée nécessaire pour que la température de la buse 11 se stabilise à une température proche de celle du liquide de refroidissement.

A présent sont détaillées les étapes d'obtention des trois cartographies 20, 21 et 22.

Pour obtenir la première cartographie 20, on commence par une première phase dans laquelle la température de la buse 11 est relevée pour chaque point de fonctionnement du moteur 2 lorsque ladite température est stabilisée, le moteur 2 étant alimenté en carburant par le deuxième injecteur 11 afin d'établir une première partie de la première cartographie de température stabilisée.

En outre, dans une deuxième phase, la température de la buse 11 est relevée pour chaque point de fonctionnement du moteur 2 lorsque ladite température est stabilisée, le moteur 2 étant alimenté en carburant par le premier injecteur 9 afin d'établir une deuxième partie de la première cartographie de température stabilisée.

Lorsque les première et deuxième parties de la première cartographie de température stabilisée sont établies, on passe à une troisième phase dans laquelle, pour chaque point de fonctionnement, le moteur 2 est tout d'abord alimenté par le deuxième injecteur 10. Lorsque la température de la buse 11 a atteint la valeur stabilisée correspondant audit point de fonctionnement déterminée par la première cartographie de température stabilisée, le deuxième injecteur 10 est coupé et le premier injecteur 9 est actionné pour alimenter le moteur 2. Le basculement du premier vers le deuxième injecteur s'effectue brutalement.

Puis, l'évolution temporelle de la température de la buse 11 est relevée jusqu'à ce que la température de la buse 11 atteigne la température correspondante de la deuxième cartographie de température stabilisée. On obtient ainsi une troisième partie de la cartographie qui donne la température de la buse 11 lors d'une phase transitoire de mode de carburation.

En résumé, la première cartographie 20 permet d'estimer la température de la buse 11 en fonction du mode de carburation du moteur 2, c'est-à-dire, lorsque le moteur est alimenté en carburant exclusivement par le premier injecteur (mode d'injection indirecte) ou exclusivement par le deuxième injecteur (mode d'injection directe) et selon la durée d'un basculement du mode d'injection indirecte au mode d'injection directe ou inversement (mode transitoire).

Afin de déterminer la première cartographie 20 de manière plus précise, l'évolution temporelle de la température de la buse 11 peut être relevée de manière similaire lors du passage du mode d'alimentation indirect vers le mode d'alimentation direct.

Les mesures de températures et de durées peuvent être réalisées sur un banc d'essai.

A présent la détermination de la deuxième cartographie 21 est détaillée.

Afin de simplifier la détermination de la deuxième cartographie 21, un modèle thermique numérique de la culasse du moteur 2 est réalisé.

La deuxième cartographie 21 est déterminée en mesurant la température de la buse 11 calculée par le modèle numérique pour différentes températures du liquide de refroidissement, le coefficient COEFF étant déterminé en faisant varier la température de refroidissement pour un point de fonctionnement du moteur, les simulations étant réitérées pour chaque point de fonctionnement.

En variante, la détermination du coefficient COEFF peut être réalisée à partir de mesures effectuées sur un banc d'essai moteur.

Ce coefficient sert à corriger de manière simple les valeurs de la température de la buse 11 issues de la première cartographie. En variante, il est aussi possible de faire toutes les mesures de la première cartographie en balayant les différentes valeurs possibles de température de liquide de refroidissement en plus des valeurs de régime et de charge. Cela est plus fastidieux.

La troisième cartographie vise à connaître la température de la buse 11 que l'on peut obtenir si, au lieu de faire fonctionner le moteur en mode d'injection indirecte exclusive, on combine une proportion de carburant injecté en mode d'injection directe.

Pour déterminer la troisième cartographie 22, une cartographie de la température de la buse 11 en mode d'injection au moins partiellement indirecte est déterminée en relevant la température de la buse 11 lors de la variation du débit de deuxième carburant injectée par le deuxième injecteur 10 pour chaque point de fonctionnement du moteur, le moteur 2 fonctionnant en mode d'injection au moins partiellement indirecte.

Les relevés de température sont par exemple effectués sur un banc d'essai moteur.

A partir des relevés de température obtenus et pour chaque point de fonctionnement du moteur, l'évolution de la température de la buse 11 en fonction du débit de deuxième carburant injecté est modélisée par deux droites D1 et D2 ayant pour équation :

$$y = A1x + B1 \quad (1)$$

pour D1, et

$$y = A2x + B2 \quad (2)$$

pour D2,

les coefficients A1, B1, C1 et D1 étant des constantes.

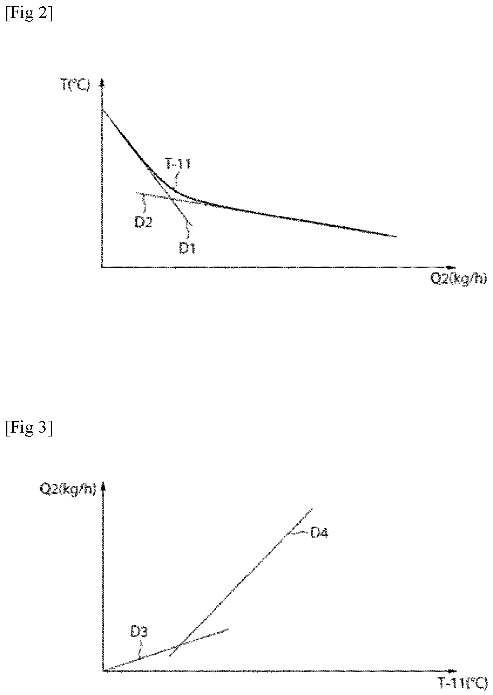

La figure 2 illustre pour un point de fonctionnement donné l'évolution de la température T-11 de la buse 11 en fonction du débit Q2 de deuxième carburant, et les droites D1 et D2 modélisant ladite évolution de la température T-11 de la buse 11.

Un gain en température à atteindre pour que la température de la buse 11 soit inférieure ou égale au premier seuil SI en mode d'injection au moins partiellement indirecte est déterminé en déterminant une cartographie de gain en température de la buse 11. La cartographie de gain est déterminée en calculant la différence entre chaque température de la première cartographie de température stabilisée et le premier seuil S1.

A partir des droites D1 et D2 et de la cartographie de gain en température, pour chaque point de fonctionnement du moteur 2, l'évolution du débit de deuxième carburant Q2 en fonction du gain en température de la buse 11 est modélisée par deux droites D3 et D4 ayant

pour équation :

$$y = C1x + D1 \quad (3)$$

pour D3, et

$$y = C2x + D2 \quad (4)$$

pour D4

les coefficients C1, D1, C2 et D2 étant des constantes.

La troisième cartographie 22 comprend l'ensemble des coefficients C1, D1, C2 et D2 pour chaque point de fonctionnement.

La troisième cartographie 22 permet de déterminer précisément pour chaque point de fonctionnement un débit de deuxième carburant à injecter pour atteindre le gain de température de la buse 11.

Le débit d'essence à injecter par le deuxième injecteur 10 pour atteindre le gain de température déterminé correspond au maximum des valeurs déterminées par les droites D3, D4.

La figure 3 illustre pour un point de fonctionnement donné l'évolution du débit Q2 de deuxième carburant modélisée par les droites D3, D4 en fonction de la température T-11 de la buse 11.

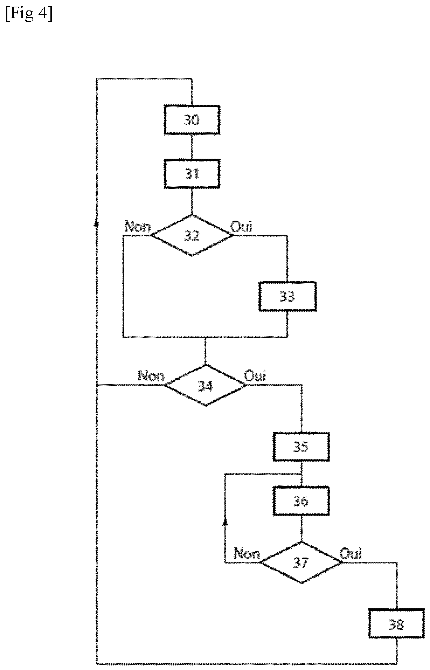

La figure 4 représente un exemple de procédé de commande du système d'alimentation à bicarburation.

On suppose que les première, deuxième et troisième cartographies 20, 21 et 22, la fonction de transfert H(P) du filtre 23, le premier seuil SI et la durée prédéterminée Tp sont sauvegardés dans la mémoire 19.

On suppose qu'un basculement du mode d'alimentation direct au mode d'alimentation indirect se produit, l'instant de basculement étant sauvegardé par l'unité de traitement 18.

Par exemple, sur un moteur fonctionnant à l'essence en injection directe et au GPL en injection indirecte, cela se produit quelques secondes après le démarrage du moteur à l'essence, notamment pour des raisons légales. Dans la suite du parcours du véhicule, si la quantité de carburant GPL dans le réservoir concerné le permet, le dispositif de contrôle moteur 3 tend à privilégier le mode de fonctionnement du moteur en mode d'injection indirecte de GPL qui minimise les émissions de polluants.

Durant une étape 30, l'unité de traitement 18 détermine une première température de la buse 11 à partir de la première cartographie 20, du régime et de la charge du moteur 2, et de la durée écoulée depuis l'instant du basculement du mode d'alimentation direct au mode d'alimentation indirect.

Le régime et la charge du moteur 2 sont par exemple transmis à l'unité de traitement par le dispositif de contrôle moteur 3.

Puis, dans une étape 31, l'unité de traitement 18 détermine la valeur du coefficient COEF de correction à partir de la température du liquide de refroidissement fournie par exemple par le dispositif de contrôle moteur 3. L'unité de traitement 18 détermine une deuxième température de la buse 11 d'injection en multipliant le coefficient COEFF de correction par la première température de la buse 11.

A ce stade, on connaît la température de la buse 11 pendant que le moteur fonctionne sans aucune injection de carburant à travers ladite buse. La température de la buse 11 tend à augmenter avec le temps passé en mode d'injection indirecte pure. Le profil d'évolution temporelle de ladite température dépend du point de fonctionnement régime -charge du moteur, qui dépend notamment de l'enfoncement de la pédale d'accélérateur du véhicule.

Cependant il se peut aussi que, pendant que le moteur fonctionne dans ce mode d'injection indirecte, le conducteur relève brutalement le pied de la pédale d'accélérateur, par exemple si le véhicule s'engage sur une pente descendante dans laquelle le conducteur souhaite bénéficier du frein moteur. La coupure d'injection de carburant tend alors, au contraire, à refroidir la température des injecteurs. Le procédé tient compte d'un tel événement pour corriger l'évaluation de la température da la buse 11.

Si le moteur 2 n'est pas alimenté en carburant (étape 32), l'unité de traitement 18 multiplie la deuxième température par le filtre du premier ordre 23 (étape 33), la température T-11 de la buse 11 étant égale à la deuxième température multipliée par le filtre du premier ordre 23.

Si le moteur 2 est alimenté en carburant (étape 32), la température T-11 de la buse 11 est égale à la deuxième température.

Le dispositif de contrôle moteur 3 fournit par exemple l'information d'alimentation du moteur.

Dans une étape 34, l'unité de traitement 18 compare la température T-11 de la buse 11 au premier seuil S1.

Le premier seuil SI est par exemple égal à la température maximale admissible Tmax-11 plus une valeur d'hystérésis.

Si la température T-11 de la buse 11 est inférieure au premier seuil SI (étape 34), le moteur 2 reste alimenté par le premier injecteur 9.

Si la température T-11 de la buse 11 est supérieure au premier seuil SI (étape 34) pendant la durée prédéterminée Tp, l'unité de traitement 18 détermine le débit Q2 de deuxième carburant à injecter pour refroidir le deuxième injecteur 11 à partir de la température T-11 de la buse, du régime et de la charge du moteur 2, et de la troisième cartographie 22 (étape 35).

L'hystérésis permet d'éviter des basculements intempestifs lorsque le point de fonctionnement du moteur 2 se situe autour d'une zone frontière entre le mode d'alimentation indirect du moteur et le mode d'alimentation bicarburant du moteur 2 (injection simultanée des premier et deuxième carburants dans la chambre de combustion 6).

La valeur d'hystérésis est par exemple déterminée par des essais de calibration sur le véhicule 1.

Puis, dans une étape 36, l'unité de traitement 18 transmet le débit Q2 de deuxième carburant au dispositif de contrôle moteur 3.

Le premier contrôleur 16 d'injection pilote le premier injecteur 9 et le deuxième contrôleur 17 d'injection pilote le deuxième injecteur 10 de sorte que le deuxième injecteur 10 injecte le débit Q2 de deuxième carburant, le débit de premier carburant injecté par le premier injecteur 9 étant injecté de sorte que la consigne de richesse du mélange d'air et des premier et deuxième carburants soit égale à 1.

Le moteur 2 est alimenté par les premier et deuxième injecteurs 9, 10 simultanément en mode d'alimentation bicarburant (mode « dual-fuel »).

Par exemple, le débit de premier carburant peut être injecté en boucle ouverte, et le débit de deuxième carburant est ajusté en ajoutant à une valeur de prépositionnement une correction de quantité injectée apte à réguler la richesse autour de la valeur stœchiométrique.

Si la température T-11 de la buse 11 est inférieure à un deuxième seuil S2 égal par exemple à la température maximale admissible Tmax-11 moins la valeur d'hystérésis (étape 37), l'unité de traitement 18 pilote le dispositif 3 de sorte que le deuxième injecteur 10 soit coupé.

Le premier contrôleur 16 d'injection pilote le premier injecteur 9 de sorte que la consigne de richesse du mélange d'air et premier carburant soit égale à 1, la température de la buse 11 étant inférieure à la température maximale admissible (étape 38). Le procédé se poursuit alors à l'étape 30.

Si la température T-11 de la buse 11 est supérieure au deuxième seuil S2, le procédé passe à l'étape 36.

L'unité de traitement 18 détermine la température T-11 de la buse 11, et le cas échéant détermine et injecte le débit Q2 de deuxième carburant à intervalle de temps régulier, par exemple à chaque cycle d'injection du premier carburant égal par exemple à 10 ms.

La condition sur la durée prédéterminée Tp avant de basculer en mode d'alimentation bicarburant permet de filtrer une phase transitoire rapide de l'estimation de la température de la buse 11.

Le deuxième seuil S2 permet d'injecter le deuxième carburant pour refroidir la buse 11 à une température inférieure à celle du premier seuil SI pour empêcher des basculements incessants de mode d'alimentation à mesure que la température de la buse 11 évolue.

Le procédé de commande du système d'alimentation à bicarburation permet d'injecter la quantité nécessaire de deuxième carburant pour refroidir la buse 11 de sorte qu'elle ne se détériore pas tout en réduisant les émissions de résidus polluants, notamment de dioxyde de carbone.

## Revendications

**1.** Procédé de commande d'un système d'alimentation à bicarburation d'un moteur thermique (2) à combustion interne pour véhicule automobile (1) comprenant au moins un premier injecteur (9) situé dans une conduite d'admission (7) d'au moins une chambre de combustion (6) dudit moteur, et un deuxième injecteur (10) comprenant une buse d'injection (11) située dans ladite chambre de combustion, le procédé comprenant l'injection d'un premier carburant par le premier injecteur dans la conduite d'admission pour faire fonctionner ledit moteur et l'injection simultanée d'un deuxième carburant par le deuxième injecteur dans la chambre de combustion, **caractérisé en ce que** le deuxième carburant est injecté lorsque la température de la buse d'injection du deuxième injecteur est supérieure à un premier seuil pendant une durée prédéterminée (Tp), le débit de deuxième carburant injecté étant déterminé pour refroidir la buse d'injection de sorte que la température de la buse d'injection soit inférieure à un deuxième seuil.

**2.** Procédé selon la revendication 1, dans lequel la détermination de la température de la buse d'injection (11) du deuxième injecteur (10) comprend :

- la détermination d'une première température de la buse d'injection à partir du régime et de la charge du moteur (2), et du mode de carburation du moteur,
- la détermination d'une deuxième température de la buse d'injection à partir de la première température de la buse d'injection et de la température d'un liquide de refroidissement du moteur,
- la correction de la deuxième température de la buse d'injection lorsque le moteur n'est pas alimenté en carburant, la température de la buse étant égale à la deuxième température de la buse ou à la deuxième température corrigée de la buse.

**3.** Procédé selon la revendication 2, dans lequel au moins une première cartographie (21) relie la première température de la buse d'injection au régime et à la charge du moteur (2), selon le mode de carburation du moteur.

**4.** Procédé selon l'une des revendications 2 et 3, dans lequel au moins une deuxième cartographie (21) relie un coefficient de correction à la température du liquide de refroidissement du moteur (2), la deuxième température de la buse d'injection étant égale au coefficient de correction multiplié par la première température de la buse d'injection.

**5.** Procédé selon l'une quelconque des revendications 2 à 4, dans lequel la détermination de la deuxième température corrigée de la buse comprend la multiplication de la deuxième température de la buse par un filtre (23) du premier ordre modélisant l'évolution temporelle de la température de la buse lorsque le moteur (2) n'est pas alimenté en carburant.

**6.** Procédé selon l'une quelconque des revendications 1 à 5, dans lequel le débit du deuxième carburant injecté est déterminé à partir de la différence de température entre la température de la buse (11) et d'une température maximale admissible de la buse, et du régime et de la charge du moteur (2).

**7.** Procédé selon la revendication 6, dans lequel au moins une troisième cartographie (22) relie le débit du deuxième carburant injecté à la différence de température, et au régime et à la charge du moteur (2).

**8.** Procédé selon l'une des revendications 1 à 7, dans lequel lorsque le débit de deuxième carburant est injecté, le débit de premier carburant injecté est réduit et le débit du deuxième carburant est ajusté de sorte que la richesse du mélange d'air et des premier et deuxième carburants soit égale à 1.

**9.** Procédé selon l'une des revendications 1 à 8, dans lequel la température de la buse d'injection (11) du deuxième injecteur (10) est déterminée à chaque cycle moteur.

**10.** Unité de traitement (18) pour système d'alimentation à bicarburation d'un moteur thermique (2) à combustion interne pour véhicule automobile (1), **caractérisée en ce que** l'unité de traitement est configurée pour déterminer un débit d'un deuxième carburant et injecter ledit débit, le deuxième carburant étant destiné à être injecté par au moins un deuxième injecteur (10) comprenant une buse d'injection (11) située dans au moins une chambre de combustion (6) du moteur lorsque au moins un premier injecteur situé dans une conduite d'admission (7) de la chambre de combustion injecte un premier carburant dans la conduite d'admission pour faire fonctionner ledit moteur, le deuxième carburant étant injecté simultanément avec le premier carburant lorsque la température de la buse d'injection du deuxième injecteur est supérieure à un premier seuil pendant une durée prédéterminée (Tp), le débit de deuxième carburant injecté étant déterminé pour refroidir la buse d'injection de sorte que la température de la buse d'injection soit inférieure à un deuxième seuil.

[Fig 1]

[Fig 2]

[Fig 3]

[Fig 4]

**EP 3 974 636 A1**

Europäisches Patentamt

European Patent Office

Office européen des brevets

# RAPPORT DE RECHERCHE EUROPEENNE

Numéro de la demande

**EP 21 19 6808**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/107074 A1 (MORRIS NATHAN [US] ET AL) 11 avril 2019 (2019-04-11) | 1,6-8,10 | INV.<br>F02D19/06 |
| Y | * alinéas [0027] – [0032], [0050], [0051], [0063] – [0073], [0089] – [0092]; figures 1,3 * | 2-5 | F02D19/08<br><br>ADD.<br>F02D41/14 |
| | ----- | | |
| X | WO 2013/185234 A1 (WESTPORT POWER INC [CA]; GM GLOBAL TECH OPERATIONS INC [US]) 19 décembre 2013 (2013-12-19) | 1,9,10 | |
| Y | * alinéas [0003], [0008], [0024] – [0031]; figures 1,10,11 * | 2,3 | |
| | ----- | | |
| X | US 2012/174891 A1 (MARRIOTT CRAIG D [US] ET AL) 12 juillet 2012 (2012-07-12)<br>* alinéas [0018] – [0031] * | 1,10 | |
| | ----- | | |
| X | US 9 453 474 B2 (FORD GLOBAL TECH LLC [US]) 27 septembre 2016 (2016-09-27)<br>* alinéas [0033] – [0036], [0045], [0046]; figures 1,2 * | 1,10 | |
| | ----- | | DOMAINES TECHNIQUES RECHERCHES (IPC) |
| Y | DE 10 2012 221046 A1 (BOSCH GMBH ROBERT [DE]) 22 mai 2014 (2014-05-22)<br>* alinéas [0025] – [0042]; figures 1-3b * | 2-5 | F02D |
| | ----- | | |

Le présent rapport a été établi pour toutes les revendications

| Lieu de la recherche | Date d'achèvement de la recherche | Examinateur |
|---|---|---|
| La Haye | 2 février 2022 | Deseau, Richard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................

& : membre de la même famille, document correspondant

EPO FORM 1503 03.82 (P04C02)

## EP 3 974 636 A1

### ANNEXE AU RAPPORT DE RECHERCHE EUROPEENNE
### RELATIF A LA DEMANDE DE BREVET EUROPEEN NO.

EP 21 19 6808

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2022

| Document brevet cité au rapport de recherche | Date de publication | Membre(s) de la famille de brevet(s) | Date de publication |
|---|---|---|---|
| US 2019107074 A1 | 11-04-2019 | CN 108119253 A | 05-06-2018 |
| | | DE 102017128030 A1 | 30-05-2018 |
| | | RU 2017137815 A | 30-04-2019 |
| | | US 2018149107 A1 | 31-05-2018 |
| | | US 2018340487 A1 | 29-11-2018 |
| | | US 2019107074 A1 | 11-04-2019 |
| WO 2013185234 A1 | 19-12-2013 | CN 104411953 A | 11-03-2015 |
| | | EP 2861852 A1 | 22-04-2015 |
| | | TR 201809346 T4 | 23-07-2018 |
| | | US 2015096530 A1 | 09-04-2015 |
| | | WO 2013185234 A1 | 19-12-2013 |
| US 2012174891 A1 | 12-07-2012 | AU 2011265507 A1 | 26-07-2012 |
| | | CN 102588125 A | 18-07-2012 |
| | | DE 102012000246 A1 | 23-08-2012 |
| | | US 2012174891 A1 | 12-07-2012 |
| US 9453474 B2 | 27-09-2016 | CN 104234853 A | 24-12-2014 |
| | | DE 102014211079 A1 | 18-12-2014 |
| | | RU 2014124188 A | 27-12-2015 |
| | | US 2014366845 A1 | 18-12-2014 |
| DE 102012221046 A1 | 22-05-2014 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20170124358
- US 20090292443 A